(19) Europäisches Patentamt
European Patent Office
Office européen des brevets

(11) **EP 2 281 782 B1**

(12) **EUROPEAN PATENT SPECIFICATION**

(45) Date of publication and mention
of the grant of the patent:
**07.12.2016 Bulletin 2016/49**

(51) Int Cl.:
*C01F 7/02* (2006.01)   *C08K 7/16* (2006.01)
*C08L 63/00* (2006.01)   *C08L 83/00* (2006.01)
*C08L 101/00* (2006.01)   *C08G 59/32* (2006.01)
*C08G 59/62* (2006.01)   *C08G 59/68* (2006.01)
*C08L 83/04* (2006.01)

(21) Application number: **09738841.7**

(22) Date of filing: **28.04.2009**

(86) International application number:
**PCT/JP2009/058402**

(87) International publication number:
**WO 2009/133904 (05.11.2009 Gazette 2009/45)**

(54) **ALUMINA POWDER, PROCESS FOR PRODUCTION OF THE SAME, AND RESIN COMPOSITIONS CONTAINING THE SAME**

ALUMINIUMOXIDPULVER, HERSTELLUNGSVERFAHREN DAFÜR UND HARZZUSAMMENSETZUNGEN, DIE ES ENTHALTEN

POUDRE D'ALUMINE, SON PROCÉDÉ DE FABRICATION ET COMPOSITIONS DE RÉSINE LA CONTENANT

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **30.04.2008 JP 2008118246**

(43) Date of publication of application:
**09.02.2011 Bulletin 2011/06**

(73) Proprietor: **Denka Company Limited**
**Tokyo 103-8338 (JP)**

(72) Inventors:
• **TANAKA, Takaaki**
**Omuta-shi**
**Fukuoka 836-8510 (JP)**
• **KUNITOMO, Osamu**
**Omuta-shi**
**Fukuoka 836-8510 (JP)**
• **MIZUMOTO, Takahisa**
**Omuta-shi**
**Fukuoka 836-8510 (JP)**
• **ESAKI, Hisashi**
**Omuta-shi**
**Fukuoka 836-8510 (JP)**
• **SHIMOKAWA, Akinori**
**Omuta-shi**
**Fukuoka 836-8510 (JP)**

(74) Representative: **Blodig, Wolfgang**
**Wächtershäuser & Hartz**
**Patentanwaltspartnerschaft mbB**
**Weinstrasse 8**
**80333 München (DE)**

(56) References cited:
**EP-A1- 1 342 747   WO-A1-2009/017170**
**WO-A2-2005/066252   JP-A- 2002 348 116**
**JP-A- 2005 281 063   US-A- 4 952 389**
**US-A1- 2006 099 421**

• **DATABASE WPI Week 200143 Thomson Scientific, London, GB; AN 2001-400803 XP002734865, & JP 2001 019425 A (DENKI KAGAKU KOGYO KK) 23 January 2001 (2001-01-23)**

EP 2 281 782 B1

**Description**

TECHNICAL FIELD

The present invention relates to an alumina powder having a high average circularity and an improved flowability at the time of being highly filled, a process for its production and a resin composition employing it.

BACKGROUND ART

In recent years, along with the progress in high functionality and high speed of heat-generating electronic components such as IC, the amount of heat generation of electronic devices having such components has been increasing, and a high heat dissipating property is desired also for a sealing material for semiconductors. In order to increase the heat dissipating property of a sealing material for semiconductors, an alumina powder having a high thermal conductivity may be incorporated to a rubber or resin. However, by a common Bayer process alumina powder, it was not possible to sufficiently utilize the thermal conductivity of the alumina, because of a remarkable rising viscosity phenomenon at the time of being highly filled.

In order to solve such a problem, a method has been proposed to spray an aluminum hydroxide powder or an aluminum hydroxide powder slurry into flames from a feed pipe having an intensive dispersing function to obtain spherical alumina powder particles (Patent Document 1). The spherical alumina particles obtained by this method had surface irregularities derived from aluminum hydroxide raw material, even with particles having an average sphericity of at least 0.90, and thus, they are still desired to be improved. Further, also in a case where Bayer process alumina powder is used as a raw material, the product has, on its surface, irregularities derived from the raw material and thus is still desired to be improved.

WO 2005/066252 A2 discloses an inorganic powder having frequency-size distribution with multiple peaks.

US 4,952,389 discloses essentially spherical alumina particles.

PRIOR ART DOCUMENT

PATENT DOCUMENT

Patent Document 1:    JP-A-2001-19425

DISCLOSURE OF THE INVENTION

OBJECT TO BE ACCOMPLISHED BY THE INVENTION

It is an object of the present invention to provide an alumina powder having a high average circularity and having an improved flow property at the time of being highly filled, a process for its production, and a resin composition employing it.

MEANS TO ACCOMPLISH THE OBJECT

The present invention provides the following to accomplish the above object.

(1) An alumina powder which has an $\alpha$-phase content of at most 30% as measured by the following method, an average circularity of at least 0.95 in each of the particle size range of from 45 to 200 $\mu$m and the particle size range of less than 45 $\mu$m, and an average particle size of 10 to 100 $\mu$m:

[method for measuring $\alpha$-phase content]
Powders prepared by mixing $\alpha$-phase alumina powder and $\theta$-phase alumina powder in mass ratios of 0:10, 5:5 and 10:0, respectively, are subjected to X-ray diffraction measurements, whereupon the integrated intensity of a peak of $\alpha$-phase detected in the vicinity of $2\theta=43°$ is calculated, and a calibration line of the integrated intensity plotted against the mixing ratio is made; and then, a sample of the alumina powder is subjected to an X-ray diffraction measurement, whereupon the integrated intensity of a peak in the vicinity of $2\theta=43°$ is calculated, and the $\alpha$-phase content is obtained from the calibration line.

(2) The alumina powder according to (1), wherein the average circularity is at least 0.97.

(3) The alumina powder of (1), having an average circularity of at least 0.96 in the particle size range of from 45 to 200 μm and of at least 0.97 in the particle size range of less than 45 μm.

(4) The alumina powder according to (1), which has an α-phase content of at most 20%.

(5) A process for producing the alumina powder as defined in any one of the above (1) to (4), which comprises heat-treating a pulverized product of fused alumina having an average particle size of at most 100 μm in flames, wherein formation of the flames is carried out by spraying a fuel gas and a supporting gas from a burner set in a furnace, and the temperature of the flames is adjusted to be at least 2,100°C.

(6) The process for producing the alumina powder according to the above (5), which comprises quenching after the heat-treatment of a pulverized product of fused alumina.

(7) The process according to (6), wherein the quenching comprises spraying of water from a middle portion of the furnace into the furnace.

(8) The alumina powder according to (1), which is produced according to the process of any one of (5) to (7).

(9) A resin composition containing the alumina powder as defined in the above (1) in a resin or rubber.

(10) The resin composition according to the above (9), wherein the resin is an epoxy resin.

(11) The resin composition according to the above (9), wherein the resin is a silicone resin.

(12) The resin composition according to the above (9), wherein the rubber is a silicone rubber.

(13) A sealing material for semiconductors, employing the resin composition as defined in the above (9) or (10).

(14) A heat dissipator employing the resin composition as defined in any one of the above (9) to (12).

ADVANTAGEOUS EFFECTS OF THE INVENTION

According to the present invention, it is possible to provide an alumina powder which has a high average circularity and which can maintain the flow property at a high level even at the time of being highly filled in a resin composition and thus is suitable as a filler, and a process for its production. The alumina powder of the present invention is useful as a sealing material for semiconductors, a heat dissipator, etc.

BRIEF DESCRIPTION OF THE DRAWING

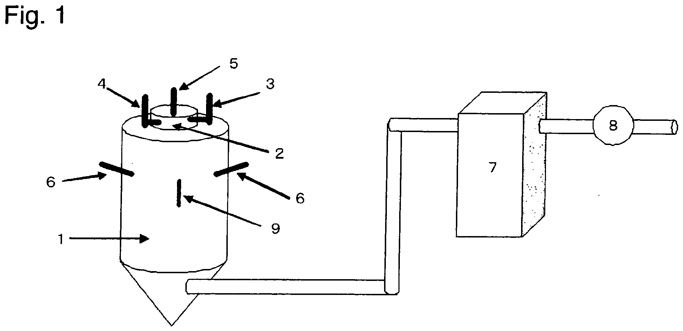

Fig. 1 is a schematic view illustrating an embodiment of the process for producing the alumina powder of the present invention.

BEST MODE FOR CARRYING OUT THE INVENTION

Now, the present invention will be described in detail.

For the alumina powder of the present invention, a fused alumina pulverized product is used as a raw material, whereby it is possible to reduce the surface cracking of alumina powder particles thereby to increase the flowability.

Further, by controlling the α-phase content in the alumina powder to be at most 30%, an improvement can be made also with respect to the surface irregularities of the particles, whereby the flowability can further be increased. The α-phase content should better be close to 0, and is at most 30%, preferably from 20 to 0%.

The α-phase content in the alumina powder can be controlled by changing the cooling condition after the heat treatment of a pulverized product of fused alumina. Such cooling can be carried out by spraying water into the furnace at a middle body portion of the furnace. The cooling condition in the furnace can be adjusted by the amount of water to be sprayed.

In the present invention, the amount of water to be sprayed for cooling is preferably at least 100 L per one hour.

The average particle size of the alumina powder of the present invention may be variously selected depending upon the particular purpose. According to the process of the present invention which will be described hereinafter, it is possible to easily produce an alumina powder having an average particle size of 10 to 100 μm, particularly from 10 to 95 μm. The average particle size can be increased or decreased by controlling the average particle size of the raw material.

In the present invention, the average particle size of the alumina powder is adjusted to be 10 to 100 μm for such a reason that if the average particle size exceeds 100 μm, it becomes difficult to accomplish an average circularity of at least 0.95. In order to obtain a high flowability in a highly filled region, the average circularity is preferably at least 0.95, and the average circularity is more preferably at least 0.97.

The average particle size can be measured, for example, by using a laser diffraction type particle size distribution measuring apparatus, CILAS GRANULOMETER "Model 920" (manufactured by BECKMAN COULTER). With respect to particles having an average particle size of less than 25 μm, 1 g of a sample, with respect to particles having an average particle size of from 25 to less than 45 μm, 2 g of a sample, or with respect to particles having an average particle size of from 45 to less than 120 μm, 4 g of a sample, is weighed and introduced directly into a sample introduction section of the CILAS GRANULOMETER. The particle size distribution measurement by the CILAS GRANULOMETER was carried out at a pump rotational speed of 60 rpm using water as a solvent and employing the refractive index of alumina (1.768) for setting.

The resin composition of the present invention is one having the alumina powder of the present invention incorporated and filled in a resin or rubber. In the present invention, one having the alumina powder of the present invention incorporated and filled in a resin is referred to as "a resin composition", and one having the alumina powder of the present invention incorporated and filled in a rubber is referred to as "a rubber composition". Further, "the resin composition" in the specification of the present invention may sometimes be used to cover the resin composition and the rubber composition.

In order to have the alumina powder highly filled in a resin or rubber, the average circularity of the alumina powder is preferably at least 0.95, particularly preferably at least 0.97. The average circularity of the alumina powder may be increased or decreased by changing the amount of a fuel gas (e.g. LPG) to be used for forming flames.

The average circularity can be measured, for example, by using a flow type particle image analyzer "FPIA-3000" manufactured by Sysmex. That is, 40 g of an alumina powder is weighed and put into a 200 ml beaker, and 100 ml of deionized water is introduced, followed by stirring and then by dispersion for 3 minutes by an ultrasonic cleaner (e.g. tradename "Ultrasonic Cleaner Powerful Type VS-150", manufactured by AS ONE Corporation). Into a JIS 45 $\mu$m sieve provided with a tray, the slurry in the beaker is introduced, and then 300 ml of deionized water is poured on the sieve, and then, depending upon the particle size, a measurement is carried out as follows. Here, for the average circularity, the perimeter of a projected image of one particle and the perimeter of a circle corresponding to the area of the projected image of the particle are analyzed by the above-mentioned flow-type particle image analyzer "FPIA-3000", the circularity is obtained by the following formula, and an average value per 36,000 particles is automatically calculated.

$$\text{Circularity} = \text{Perimeter of a projected image of a particle} / \text{Perimeter of a circle corresponding to the area of the projected image of the particle}$$

[Average circularity of particles having particle sizes of from 45 to 200 $\mu$m]

From 0.15 to 0.20 g of particles on the sieve are weighed and put into a 5 ml container, and 5 ml of a 25 mass% propylene glycol aqueous solution is added thereto, followed by dispersion for 10 seconds by an ultrasonic cleaner. The dispersion is put in its entire amount into a flow-type particle image analyzer "FPIA-3000" and measured in a HPF mode/quantitative count system (total number counted: 36,000 particles, number of repeated measurement: once), whereupon an analysis is carried out within a particle size range of from 45 to 200 $\mu$m (circle-equivalent diameter/based on the number of particles).

[Average circularity of particles having particle sizes of less than 45 $\mu$m]

The slurry settled in the above tray is stirred by a stirring rod, and 0.5 ml thereof is sampled into a 5 ml container, and 5 ml of a 25 mass% propylene glycol aqueous solution is added, followed by dispersion for 10 seconds by an ultrasonic cleaner. The dispersion is introduced in its entire amount into a flow-type particle image analyzer "FPIA-3000" and measured in a HPF mode/quantitative count system (total number counted: 36,000 particles, number of repeated measurement: once), whereupon an analysis is carried out within a particle size range of from 1.5 to less than 45 $\mu$m (circle-equivalent diameter/based on the number of particles).

The production of the alumina powder of the present invention is carried out preferably by using the installation shown in Fig. 1 by using a pulverized product of fused alumina as a raw material powder.

As outlined, from the top of a furnace, the pulverized product of a fused alumina is sprayed and melted in flames, and from a middle body portion of the furnace, water is sprayed into the furnace for quenching, whereupon the obtained spheroidized particles are transported together with an exhaust gas by a blower to a bag filter and thereby collected. Formation of flames is carried out by spraying a fuel gas such as hydrogen, natural gas, acetylene gas, propane gas or butane and a supporting gas such as air or oxygen from a burner set in the furnace. The temperature of the flames is adjusted to be preferably at least 2,100°C, particularly preferably from 2,100 to 2,300°C.

For the cooling by spraying water into the furnace, a twin-fluid nozzle may be used. In the present invention, it is preferred to carry out the quenching treatment by spraying water by means of Atomax nozzle BN160 Model (manufactured byAtomax Co., Ltd.).

In such quenching treatment by spraying water in the present invention, the temperature in the furnace is preferably lowered by from 200 to 400°C as compared with a case where no water is sprayed.

Such a range of lowering the temperature in the furnace can be attained preferably by the above-mentioned spray amount of water.

In the process for producing an alumina powder of the present invention, the α-phase content of the alumina powder can be adjusted by the spray amount of water (corresponding to setting of the temperature condition in the furnace).

The pulverized product of fused alumina as the raw material to be used in the process for producing an alumina powder of the present invention, is preferably a pulverized product of a melt-solidified Bayer process alumina. For the melting of Bayer process alumina, an arc furnace may be used. The average particle size of the pulverized product of fused alumina is preferably at most 100 μm, more preferably from 10 to 95 μm.

In a case where the alumina powder in the present invention is to be used for a sealing material for semiconductors, it is necessary to reduce ionic impurities in the alumina powder. For the reduction of ionic impurities in the alumina powder, it is preferred to subject the flame-treated product of the pulverized product of fused alumina to washing treatment with water. For such washing treatment with water, a method disclosed in JP-A-2005-281063 may, for example, be used. That is, the treatment is carried out by washing the alumina powder with water having a pH of from 3 to 7 which does not substantially contain $Na^+$, $K^+$, $NH_4^+$, $Mg_2^+$ or $Ca_2^+$, in the presence of an ion exchange resin.

As the resin for the resin composition of the present invention, it is possible to use, for example, an epoxy resin, a phenol resin, a melamine resin, a urea resin, an unsaturated polyester, a fluororesin; a polyamide such as a polyimide, a polyamide imide or a polyether imide; a polyester such as a polybutylene terephthalate or a polyethylene terephthalate; a polyphenylene sulfide, an aromatic polyester, a polysulfone, a liquid crystal polymer, a polyether sulfone, a polycarbonate, a maleimide-modified resin, an ABS resin, an AAS (acrylonitrile/acrylic rubber/styrene) resin, an AES (acrylonitrile/ethylene/propylene/diene rubber/styrene) resin, an EVA (ethylene/vinyl acetate copolymer) resin or a silicone resin. Among them, an epoxy resin, a phenol resin, a fluororesin, a polyimide, a polyphenylene sulfide, a polycarbonate, an ABS resin or a silicone resin is, for example, preferred.

Particularly preferred is an epoxy resin or a silicone resin.

The resin composition of the present invention is one having the alumina powder of the present invention incorporated and filled in the above-mentioned resin or rubber. The resin composition of the present invention can be produced by blending predetermined amounts of the respective materials by a blender or a Henschel mixer and then kneaded by e.g. heated rollers, a kneader or a single or twin screw extruder, followed by cooling and then by pulverization. The content of the alumina powder varies depending upon the particular applications, but the present invention is characterized in that the alumina powder can be highly filled in the resin or rubber, and its content is preferably made to be at least 40 vol%, more preferably from 65 to 90 vol%, based on 100 vol% of the resin composition.

One containing the alumina powder of the present invention in an epoxy resin is suitable as a sealing material for semiconductors. In order to obtain a high heat conductivity exceeding 3 W/m · k as a sealing material for semiconductors, the content of the alumina powder is adjusted to be preferably at least 70 vol%, more preferably from 75 to 90 vol%, based on 100 vol% of the resin composition.

One containing the alumina powder of the present invention in a silicone resin or silicone rubber, is suitable as a heat dissipator. In order to obtain a high heat conductivity as a heat dissipator, the content of the alumina powder is adjusted to be at least 65 vol%, more preferably from 70 to 80 vol%, based on 100 vol% of the resin composition.

EXAMPLES

Now, the present invention will be described in further detail with reference to Examples, but it should be understood that the present invention is by no means limited to such Examples. Examples 1, 5, 6, 7, 11, 15, 16, 17, 21, 25, 26 and 27 are comparative.

Examples 1 to 9 and Comparative Examples 1 to 3 (production of alumina powder)

[Production of pulverized product of fused alumina]

Bayer process calcined alumina powder "D" (A11 manufactured by Light Metal Co., Ltd.) was melted by an arc furnace, followed by cooling and pulverization to obtain pulverized products of fused alumina "A", "B" and "C". The production of "A", "B" and "C" was differentiated by adjusting the pulverization time.

For the pulverization treatment at the time of preparing the raw material, a ball mill (AXB-15, manufactured by Seiwa Giken Co., Ltd.) was used, and as pulverization media, alumina balls (balls with a diameter of 30 mm) were used.

Table 1 shows the types and average particles sizes of the alumina powder raw materials "A", "B", "C" and "D" used in the present invention.

[Production of alumina powder]

[Heat treatment]

The heat treatment was carried out by using the production apparatus shown in Fig. 1. Flames of from 2,150 to 2,500°C were formed by adjusting the spray amounts of the fuel gas (LPG) and the supporting gas ($O_2$ gas) to be as shown in Table 2. The alumina powder raw material (supply amount: 30 kg/hr) was accompanied with oxygen gas (supply amount: 20 $Nm^3$/hr) and sprayed from a nozzle into flames, and the obtained alumina powder was recovered from a bag filter. The temperature of the flames was confirmed by installing a burner outside the furnace and by using a radiation thermometer IS5/F Model manufactured by Impac.

[Quenching treatment]

In order to reduce the $\alpha$-phase content, cooling treatment by spraying water into the furnace was carried out. For such water spraying, Atomax nozzle BN160 Model (manufactured by Atomax Co., Ltd.) was used. Spraying of water was carried out from 16 holes equally separated around the circumference of the furnace. The temperature of the water to be sprayed was adjusted to 10°C. The amount of water sprayed is shown in Table 2.
Further, with respect to the degree of quenching, the temperature of the furnace wall was measured by inserting an R themocouple in a horizontal direction to the furnace wall surface in the same horizontal plane as the nozzles for water spraying, and the cooling effects were confirmed by using the furnace wall temperature as a reference. The measured furnace wall temperature is shown in Table 2.

[Water washing treatment]

The obtained alumina powder was subjected to water washing treatment. The water washing treatment was carried out in accordance with the following procedure. That is, for the water washing treatment, the alumina powder was mixed with deionized water of pH=7 wherein $Li^+$, $Na^+$ and $K^+$ components were not detected by measurement by means of an atomic absorption spectrophotometer, to prepare an aqueous slurry having an alumina powder concentration of 40 mass%, which was stirred for 1 hour by means of a stirring and mixing apparatus (tradename "Stir Disperser RSV175" manufactured byAshizawa Finetech Ltd.) and then subjected to dehydration treatment by a filter press. The water content of the obtained cake was at most 20 mass% in all cases. This cake was dried at 150°C for 48 hours by a shelve-type drying machine to obtain water washing-treated alumina powder.
The average circularity of the alumina powder was measured by the following method. The results are shown in Table 3.

[Average circularity]

The average circularity was measured, for example, by using a flow type particle image analyzer "FPIA-3000" manufactured by Sysmex. That is, 40 g of an alumina powder was weighed and put into a 200 ml beaker, and 100 ml of deionized water was introduced, followed by stirring and then by dispersion for 3 minutes by an ultrasonic cleaner (e.g. tradename "Ultrasonic Cleaner Powerful Type VS-150", manufactured by AS ONE Corporation). Then, into a JIS 45 $\mu$m sieve provided with a tray, the slurry in the beaker was introduced, and then 300 ml of deionized water was poured on the sieve, and then, depending upon the particle size, a measurement was carried out as follows. Here, for the average circularity, the perimeter of a projected image of one particle and the perimeter of a circle corresponding to the area of the projected image of the particle were analyzed by the above-mentioned flow-type particle image analyzer "FPIA-3000", the circularity was obtained by the following formula, and an average value per 36,000 particles was automatically calculated.

$$\text{Circularity} = (\text{Perimeter of a projected image of a particle})/(\text{Perimeter of a circle}$$
$$\text{corresponding to the area of the projected image of the particle})$$

[Average circularity of particles having particle sizes of from 45 to 200 $\mu$m]

From 0.15 to 0.20 g of particles on the sieve were weighed and put into a 5 ml container, and 5 ml of a 25 mass% propylene glycol aqueous solution was added thereto, followed by dispersion for 10 seconds by an ultrasonic cleaner. The dispersion was put in its entire amount into a flow-type particle image analyzer "FPIA-3000" and measured in a HPF mode/quantitative count system (total number counted: 36,000 particle, number of repeated measurement: once) whereupon an analysis was carried out within a particle size range of from 45 to 200 μm (circle-equivalent diameter/based on the number of particles).

[Average circularity of particles having particle sizes of less than 45 μm]

The slurry settled in the above tray was stirred by a stirring rod, and 0.5 ml thereof was sampled into a 5 ml container, and 5 ml of a 25 mass% propylene glycol aqueous solution was added, followed by dispersion for 10 seconds by a ultrasonic cleaner. The dispersion was introduced in its entire amount into a flow-type particle image analyzer "FPIA-3000" and measured in a HPF mode/quantitative count system (total number counted: 36,000 particles, number of repeated measurement: once) whereupon an analysis was carried out within a particle size range of from 1.5 to less than 45 μm (circle-equivalent diameter/based on the number of particles).

The average particle size was measured, for example, by using a laser diffraction type particle size distribution measuring apparatus, CILAS GRANULOMETER "Model 920" (manufactured by BECKMAN COULTER). With respect to particles having an average particle size of at most 25 μm, 1 g of a sample, with respect to particles having an average particle size of from 25 to 45 μm, 2 g of a sample, or with respect to particles having an average particle size of from 45 to 120 μm, 4 g of a sample, was weighed and introduced directly into a sample introduction section of the CILAS GRANULOMETER. The particle size distribution measurement by the CILAS GRANULOMETER was carried out at a pump rotational speed of 60 rpm using water as a solvent and employing the refractive index of alumina (1.768) for setting.

The α-phase content was measured by the following method. The results are shown in Table 3.

The α-phase content can be obtained by a calibration line method of X-ray diffraction. For the measurement of the X-ray diffraction, JDX-3500 Model X-ray diffraction apparatus (manufactured by JEOL Ltd.) was used.

[Method for measuring α-phase content]

Powders prepared by mixing α-phase alumina powder AA-05 (manufactured by Sumitomo Chemical Co., Ltd.) and θ-phase alumina powder TAIMICRON TM-100D (manufactured by TAIMEI CHEMICALS Co., Ltd.) in mass ratios of 0:10, 5:5 and 10:0, respectively, were subjected to X-ray diffraction measurements, whereupon the integrated intensity of a peak of α-phase detected in the vicinity of 2θ=43° was calculated, and a calibration line of the integrated intensity plotted against the mixing ratio was made.

Then, a sample of the alumina powder was subjected to an X-ray diffraction measurement, whereupon the integrated intensity of a peak in the vicinity of 2θ=43° was calculated, and the α-phase content was obtained from the calibration line.

EXAMPLES 11 to19 and COMPARATIVE EXAMPLES 11 to 13

In Examples 11 to 18 and Comparative Examples 11 to 13 in Table 3, 30 parts by volume of the resin blend shown in Table 5 and 70 parts by volume of the alumina powder obtained in one of the above Examples 1 to 8 and Comparative Examples 1 to 3, were mixed to prepare an epoxy resin composition. With respect to the respective resin compositions of such Examples and Comparative Examples, the flowability and the heat conductivity were evaluated as follows.

Further, in Example 19, 20 parts by volume of the resin blend shown in Table 5 and 80 parts by volume of the alumina powder of Example 9 were mixed to prepare an epoxy resin composition, and its flowability and heat conductivity were evaluated as follows.

Here, preparation of a heat dissipator used in the measurement of the heat conductivity was carried out as follows. A material for semiconductors, prepared by heating and kneading by a twin screw extrusion kneader was cast into a plate-forming mold of 25 mm × 25 mm × 3 mm by means of a transfer molding machine to prepare a sample for evaluation of the heat conductivity.

[Flowability]

Using a spiral flow mold, a spiral flow value of the sealing material for semiconductors, prepared by heating and kneading by the twin screw extrusion kneader, was measured by means of a transfer molding machine provided with a spiral flow measuring mold in accordance with EMMI-66 (Epoxy Molding Material Institute: Society of Plastic Industry). The transfer molding conditions were such that the mold temperature was 175°C, the molding pressure was 7.4 MPa (gauge pressure), and the pressure holding time was 90 seconds.

EXAMPLES 21 to 29 and COMPARATIVE EXAMPLES 21 to 23

[Viscosity evaluation]

In Examples 21 to 28 and Comparative Examples 21 to 23 in Table 4, 40 parts by volume of the liquid silicone rubber and the 70 parts by volume of the alumina powder obtained in one of the above Examples 1 to 8 and Comparative Examples 1 to 3, were mixed to prepare a silicone rubber composition. With respect to the respective silicone rubber compositions of such Examples and Comparative Examples, the viscosity and the heat conductivity were evaluated as follows.

Further, in Example 29, 30 parts by volume of the liquid silicone rubber and 70 parts by volume of the alumina powder obtained in Example 9 were mixed to prepare a silicone rubber composition, and its viscosity and heat conductivity were evaluated as follows. Further, as the liquid silicone rubber, YE5822A (manufactured by Momentive Material) was used.

The obtained results are shown together with the production conditions for the alumina powders (Examples 1 to 9 and Comparative Examples 1 to 3) in Table 4.

[Viscosity measurement]

For the viscosity measurement, heat-treated alumina powder was introduced into the liquid silicone rubber YE5822A manufactured by Momentive Material, followed by mixing by means of a stirring machine NZ-1100, manufactured by TOKYO RIKAKIKAI Co., Ltd.. The viscosity of the mixed silicone rubber composition was measured, after vacuum deaeration, by B Model viscosity TVB-10, manufactured by TOKI SANGYO CO., LTD. For the viscosity measurement, No. 7 spindle was used, and the measurement was carried out at a rotational speed of 20 rpm at a room temperature of 20°C.

Further, preparation of the heat dissipator using the silicone rubber composition was carried out as follows.

That is, to the silicone rubber composition comprising the liquid silicone rubber YE5822A and the alumina powder, prepared in the above viscosity measurement, liquid silicone rubber YE5822B was added in a ratio of 10:1 by mass, to YE5822A (i.e. YE5822A:YE5822B=10:1). After the addition of YE5822B, the mixture was molded and heat-treated in an atmosphere of 120°C to prepare a heat dissipator.

[Heat conductivity measurement]

The heat dissipator of the epoxy resin composition or the silicone rubber composition prepared as described above was molded into a size of 25 mm $\times$ 25 mm (length $\times$ width) and a thickness of 3 mm, and the molded member was sandwiched between a 15 mm $\times$ 15 mm copper heater case and a copper plate and set under a clamping torque of 5 kgf/cm. Then, a power of 15 W was applied to the copper heater case and maintained for 4 minutes, whereupon the temperature difference between the copper heater case and the copper plate was measured, and the thermal resistance was calculated by the following formula.

Thermal resistance (°C/W)=

Temperature difference (°C) between copper heater case and copper plate/

Power (W) applied to heater

The heat conductivity can be calculated by the following formula from the thermal resistance (°C/W), the heat transfer area [area of copper heater case] ($m^2$) and the thickness (m) of the molded product under a clamping torque of 5 kgf/cm.

Heat conductivity (W/m · k)=Thickness (m) of molded product/

{Thermal resistance (°C/W) × heat transfer area ($m^2$)}

Tables 3 and 4 show the results of measurement of the physical properties of the resin compositions and the rubber compositions in the respective Examples and Comparative Examples.

Further, "filler filling rate" in Tables 3 and 4 is meant for the filling rate (vol%) of the alumina powder obtained in each Example or Comparative Example.

TABLE 1

| Symbol for alumina powder raw material | Type of raw material | Average particle size (μm) |
|---|---|---|
| A | Pulverized product of fused alumina | 46.4 |
| B | Pulverized product of fused alumina | 95.6 |
| C | Pulverized product of fused alumina | 124.3 |
| D | Calcined alumina powder | 48.9 |

TABLE 2

| | Symbol for alumina powder raw material | Amount of LPG (Nm³/hr) | Amount of supporting $O_2$ (Nm³/hr) | Amount of water sprayed (L/(hr · nozzle)) | Temperature of flames (°C) | Temperature of furnace wall (°C) |
|---|---|---|---|---|---|---|
| Ex. 1 | A | 25 | 125 | 0 | 2150 | 1046 |
| Ex. 2 | A | 25 | 125 | 5 | 2150 | 983 |
| Ex. 3 | A | 25 | 125 | 15 | 2150 | 921 |
| Ex. 4 | A | 25 | 125 | 20 | 2150 | 853 |
| Ex. 5 | B | 40 | 200 | 0 | 2300 | 1351 |
| Ex. 6 | B | 40 | 200 | 5 | 2300 | 1236 |
| Ex. 7 | B | 40 | 200 | 15 | 2300 | 1125 |
| Ex. 8 | B | 40 | 200 | 20 | 2300 | 1038 |
| Ex. 9 | A | 25 | 125 | 20 | 2150 | 853 |
| Comp. Ex. 1 | C | 50 | 250 | 0 | 2400 | 1390 |
| Comp. Ex. 2 | C | 60 | 300 | 0 | 2500 | 1455 |
| Comp. Ex. 3 | D | 25 | 125 | 0 | 2150 | 1026 |

TABLE 3

| | Alumina powder used | Average particle size (μm) | Circularity | | α-phase content (%) | Filler filling rate (vol%) | Spiral flow (cm) | Heat conductivity (W/m · K) |
| | | | Particles of 45-200 μm | Particles of less than 45 μm | | | | |
|---|---|---|---|---|---|---|---|---|
| Ex. 11 | Ex. 1 | 49.2 | 0.99 | 0.99 | 30.5 | 70 | 104.8 | 4.2 |
| Ex. 12 | Ex. 2 | 48.4 | 0.98 | 0.99 | 25.6 | 70 | 110.3 | 4.1 |
| Ex. 13 | Ex. 3 | 47.9 | 0.98 | 0.99 | 21.4 | 70 | 116.8 | 4.1 |
| Ex. 14 | Ex. 4 | 48.8 | 0.98 | 0.99 | 17.5 | 70 | 123.1 | 4 |
| Ex. 15 | Ex. 5 | 98.7 | 0.97 | 0.99 | 38.2 | 70 | 113.8 | 4.4 |
| Ex. 16 | Ex. 6 | 97.1 | 0.97 | 0.98 | 34.6 | 70 | 119.6 | 4.3 |
| Ex. 17 | Ex. 7 | 97.3 | 0.96 | 0.97 | 31.4 | 70 | 117.1 | 4.2 |
| Ex. 18 | Ex. 8 | 96.6 | 0.96 | 0.97 | 28.9 | 70 | 118.8 | 4.2 |

(continued)

|  | Alumina powder used | Average particle size ($\mu$m) | Circularity | | $\alpha$-phase content (%) | Filler filling rate (vol%) | Spiral flow (cm) | Heat conductivity (W/m · K) |
|  |  |  | Particles of 45-200 $\mu$m | Particles of less than 45 $\mu$m |  |  |  |  |
| Ex. 19 | Ex. 9 | 48.8 | 0.98 | 0.99 | 17.5 | 80 | 85.6 | 5.3 |
| Comp. Ex. 11 | Comp. Ex. 1 | 127.9 | 0.89 | 0.99 | 51.6 | 70 | 51.8 | 4.1 |
| Comp. Ex. 12 | Comp. Ex. 2 | 129.6 | 0.93 | 0.99 | 42.8 | 70 | 83.7 | 4.1 |
| Comp. Ex. 13 | Comp. Ex. 3 | 52.1 | 0.97 | 0.98 | 45.9 | 70 | 84.3 | 4.1 |

TABLE 4

|  | Alumina powder used | Amount of LPG (Nm$^3$/hr) | Amount of supporting O$_2$ (Nm$^3$/hr) | Amount of water sprayed (L/(hr · nozzle)) | Filler filling rate (vol%) | Viscosity (cP) | Heat conductivity (W/m · K) |
|---|---|---|---|---|---|---|---|
| Ex. 21 | Ex. 1 | 25 | 125 | 0 | 60 | 106590 | 3.4 |
| Ex. 22 | Ex. 2 | 25 | 125 | 5 | 60 | 97410 | 3.3 |
| Ex. 23 | Ex. 3 | 25 | 125 | 15 | 60 | 92820 | 3.3 |
| Ex. 24 | Ex. 4 | 25 | 125 | 20 | 60 | 88740 | 3.2 |
| Ex. 25 | Ex. 5 | 40 | 200 | 0 | 60 | 90984 | 3.5 |
| Ex. 26 | Ex. 6 | 40 | 200 | 5 | 60 | 84456 | 3.4 |
| Ex. 27 | Ex. 7 | 40 | 200 | 15 | 60 | 80376 | 3.4 |
| Ex. 28 | Ex. 8 | 40 | 200 | 20 | 60 | 75888 | 3.4 |
| Ex. 29 | Ex. 9 | 25 | 125 | 20 | 70 | 144420 | 4.3 |
| Comp. Ex. 21 | Comp. Ex. 1 | 50 | 250 | 0 | 60 | 159630 | 3.3 |
| Comp. Ex. 22 | Comp. Ex. 2 | 60 | 300 | 0 | 60 | 136170 | 3.3 |
| Comp. Ex. 23 | Comp. Ex. 3 | 25 | 125 | 0 | 60 | 191250 | 3.3 |

TABLE 5

| Type of material | Variety | Blend (mass%) |
|---|---|---|
| Epoxy resin | Orthocresol novolac type ("EOCN-1020" manufactured by Nippon Kayaku Co., Ltd.) | 63.8 |
| Curing agent | Phenol novolac resin ("PMS-4261" manufactured by Gun Ei Chemical Industry Co., Ltd. | 32.1 |
| Curing accelerator | Triphenylphosphine (manufactured by HOKKO CHEMICAL INDUSTRY CO., LTD. | 0.6 |
| Releasing agent | Montanoic acid ester ("WaxEflakes" manufactured by Clariant Japan) | 3.5 |

(continued)

| Type of material | Variety | Blend (mass%) |
|---|---|---|
| Silane coupling agent | Organosilane ("KBM-403" manufactured by Shin-Etsu Chemical Co., Ltd. | 0.5 Part by mass to 100 parts by mass of alumina powder |

As is evident from Tables 3 and 4, the resin compositions using the alumina powders of the present invention have low viscosities and high spiral flow values, and thus, the flowability is remarkably improved.

The resin compositions using the alumina powders of the present invention are suitable for application to a sealing material for semiconductors or a heat dissipator.

INDUSTRIAL APPLICABILITY

The alumina powder of the present invention is useful as a filler for a resin composition and further useful for a molding compound or a heat dissipating sheet for e.g. automobiles, portable electronic equipments, industrial equipments or household electric appliances.

Further, the sealing material for semiconductors obtainable from the resin composition of the present invention is useful as a component of which the heat dissipation property is important, such as graphic chips.

MEANING OF SYMBOLS

1:    Melting furnace
2:    Burner
3:    Fuel gas supply pipe
4:    Supporting gas supply pipe
5:    Raw material powder supply pipe
6:    Water supply pipe
7:    Bag filter
8:    Blower
9:    R thermocouple

**Claims**

1.   An alumina powder which has

(i) an $\alpha$-phase content of at most 30% as measured by the following method,
(ii) an average circularity of at least 0.95 in each of the particle size range of from 45 to 200 $\mu$m and the particle size range of less than 45 $\mu$m, and
(iii) an average particle size of 10 to 100 $\mu$m:

[method for measuring $\alpha$-phase content]
Powders prepared by mixing $\alpha$-phase alumina powder and $\theta$-phase alumina powder in mass ratios of 0:10, 5:5 and 10:0, respectively, are subjected to X-ray diffraction measurements, whereupon the integrated intensity of a peak of $\alpha$-phase detected in the vicinity of $2\theta=43\underline{o}$ is calculated, and a calibration line of the integrated intensity plotted against the mixing ratio is made; and then, a sample of the alumina powder is subjected to an X-ray diffraction measurement, whereupon the integrated intensity of a peak in the vicinity of $2\theta=43\underline{o}$ is calculated, and the $\alpha$-phase content is obtained from the calibration line.

2.   The alumina powder according to claim 1, wherein the average circularity is at least 0.97.

3.   The alumina powder of claim 1, having an average circularity of at least 0.96 in the particle size range of from 45 to 200 $\mu$m and of at least 0.97 in the particle size range of less than 45 $\mu$m.

4.   The alumina powder according to claim 1, which has an $\alpha$-phase content of at most 20%.

**5.** A process for producing the alumina powder as defined in any one of Claims 1 to 4, which comprises heat-treating a pulverized product of fused alumina having an average particle size of at most 100 μm in flames, wherein formation of the flames is carried out by spraying a fuel gas and a supporting gas from a burner set in a furnace, and the temperature of the flames is adjusted to be at least 2,100°C.

**6.** The process for producing the alumina powder according to Claim5, which comprises quenching after the heat-treatment of a pulverized product of fused alumina.

**7.** The process according to claim 6, wherein the quenching comprises spraying of water from a middle portion of the furnace into the furnace.

**8.** The alumina powder according to claim 1, which is produced according to the process of any one of claims 5 to 7.

**9.** A resin composition containing the alumina powder as defined in Claim 1 or 8 in a resin or rubber.

**10.** The resin composition according to Claim 9, wherein the resin is an epoxy resin.

**11.** The resin composition according to Claim 9, wherein the resin is a silicone resin.

**12.** The resin composition according to Claim 9, wherein the rubber is a silicone rubber.

**13.** A sealing material for semiconductors, employing the resin composition as defined in Claim 9 or 10.

**14.** A heat dissipator employing the resin composition as defined in any one of Claims 9 to 12.

**Patentansprüche**

**1.** Aluminiumoxidpulver, welches

(i) einen Gehalt der α-Phase von höchstens 30% aufweist, wie er durch das folgende Verfahren gemessen wird,
(ii) eine durchschnittliche Zirkularität von wenigstens 0,95 in jedem Bereich der Partikelgröße von 45 bis 200 μm und dem Bereich der Partikelgröße von weniger als 45 μm aufweist, und
(iii) eine durchschnittliche Partikelgröße von 10 bis 100 μm aufweist:

[Verfahren zur Messung des Gehalts der α-Phase]
Pulver, die durch Mischen von Aluminiumoxidpulver der α-Phase und Aluminiumoxidpulver der θ-Phase mit Massenverhältnissen von 0:10, 5:5 beziehungsweise 10:0 hergestellt wurden, wurden Röntgenstrukturanalyse-Messungen unterzogen, woraufhin die integrierte Intensität eines Peaks der α-Phase, der in der Nähe von 2θ=43° detektiert wurde, berechnet wird und eine Eichlinie der integrierten Intensität in Abhängigkeit von dem Mischungsverhältnis aufgetragen wird; und dann wird eine Probe des Aluminiumoxidpulvers einer Röntgenstrukturanalyse-Messung unterzogen, woraufhin die integrierte Intensität eines Peaks in der Nähe von 2θ=43° berechnet wird und der Gehalt der α-Phase aus der Eichlinie erhalten wird.

**2.** Das Aluminiumoxidpulver nach Anspruch 1, wobei die durchschnittliche Zirkularität wenigstens 0,97 beträgt.

**3.** Das Aluminiumoxidpulver nach Anspruch 1, welches eine durchschnittliche Zirkularität von wenigstens 0,96 in dem Bereich der Partikelgröße von 45 bis 200 μm und wenigstens 0,97 in dem Bereich der Partikelgröße von weniger als 45 μm aufweist.

**4.** Das Aluminiumoxidpulver nach Anspruch 1, welches einen Gehalt der α-Phase von höchstens 20% aufweist.

**5.** Verfahren zur Herstellung eines wie in einem der Ansprüche 1 bis 4 definierten Aluminiumoxidpulvers, welches das Wärmebehandeln eines pulverisierten Produkts von Schmelzkorund (fused alumina) mit einer durchschnittlichen Partikelgröße von höchstens 100 μm in Flammen umfasst, wobei die Flammenbildung durch Einspritzen eines Brenngases und eines Trägergases von einem Brenner in einen Ofen durchgeführt wird und die Temperatur der Flammen so eingestellt wird, dass sie wenigstens 2100°C beträgt.

6. Das Verfahren zur Herstellung eines Aluminiumoxidpulvers nach Anspruch 5, welches das Abschrecken des pulverisierten Produkts des Schmelzkorunds nach der Wärmebehandlung umfasst.

7. Das Verfahren nach Anspruch 6, wobei das Abschrecken das Aufsprühen von Wasser aus einem mittleren Teil des Ofens in den Ofen umfasst.

8. Das Aluminiumoxidpulver nach Anspruch 1, welches durch das Verfahren nach einem der Ansprüche 5 bis 7 hergestellt wird.

9. Harzzusammensetzung, die das wie in einem der Ansprüche 1 oder 8 definierte Aluminiumoxidpulver in einem Harz oder Gummi enthält.

10. Die Harzzusammensetzung nach Anspruch 9, wobei das Harz ein Epoxidharz ist.

11. Die Harzzusammensetzung nach Anspruch 9, wobei das Harz ein Silikonharz ist.

12. Die Harzzusammensetzung nach Anspruch 9, wobei der Gummi ein Silikongummi ist.

13. Dichtungsmaterial für Halbleiter, bei dem die wie in Anspruch 9 oder 10 definierte Harzzusammensetzung eingesetzt wird.

14. Wärmeableiter, bei dem die wie in einem der Ansprüche 9 bis 12 definierte Harzzusammensetzung eingesetzt wird.

**Revendications**

1. Poudre d'alumine présentant

   (i) une teneur en phase $\alpha$, telle que mesurée par le procédé qui suit, d'au plus 30 %,
   (ii) une circularité moyenne d'au moins 0,95 dans chacune parmi la plage de granulométrie allant de 45 à 200 $\mu$m et la plage de granulométrie inférieure à 45 $\mu$m, et
   (iii) une granulométrie moyenne de 10 à 100 $\mu$m ;

   [procédé pour mesurer la teneur en phase $\alpha$] :

   des poudres préparées par mélange de poudre d'alumine en phase $\alpha$ et de poudre d'alumine en phase $\theta$, en des rapports en masse de 0/10, 5/5 et 10/0, respectivement, sont soumises à des mesures de diffraction des rayons X, après quoi l'intensité intégrée d'un pic de phase $\alpha$ détecté au voisinage de $2\theta = 43°$ est calculée, et une courbe d'étalonnage de l'intensité intégrée tracée en fonction du rapport de mélange est réalisée ; et ensuite un échantillon de la poudre d'alumine est soumis à une mesure de diffraction des rayons X, après quoi l'intensité intégrée d'un pic au voisinage de $2\theta = 43°$ est calculée, et la teneur en phase $\alpha$ est obtenue à partir de la courbe d'étalonnage.

2. Poudre d'alumine selon la revendication 1, dans laquelle la circularité moyenne est d'au moins 0,97.

3. Poudre d'alumine selon la revendication 1, présentant une circularité moyenne d'au moins 0,96 dans la plage de granulométrie allant de 45 à 200 $\mu$M et d'au moins 0,97 dans la plage de granulométrie inférieure à 45 $\mu$m.

4. Poudre d'alumine selon la revendication 1, qui présente une teneur en phase $\alpha$ d'au plus 20 %.

5. Procédé pour produire la poudre d'alumine telle que définie dans l'une quelconque des revendications 1 à 4, qui comprend le traitement à la chaleur d'un produit pulvérisé d'alumine fondue présentant une granulométrie moyenne d'au plus 100 $\mu$m dans des flammes, dans lequel la formation des flammes est réalisée par pulvérisation d'un gaz combustible et d'un gaz de support depuis un brûleur disposé dans un four, et la température des flammes est ajustée pour être d'au moins 2100°C.

6. Procédé pour produire de la poudre d'alumine selon la revendication 5, qui comprend une trempe après le traitement à la chaleur d'un produit pulvérisé d'alumine fondue.

**7.** Procédé selon la revendication 6, dans lequel la trempe comprend la pulvérisation d'eau dans le four depuis une partie centrale du four.

**8.** Poudre d'alumine selon la revendication 1, qui est produite conformément au procédé de l'une quelconque des revendications 5 à 7.

**9.** Composition de résine contenant la poudre d'alumine telle que définie dans la revendication 1 à 8 dans une résine ou un caoutchouc.

**10.** Composition de résine selon la revendication 9, dans laquelle la résine est une résine époxy.

**11.** Composition de résine selon la revendication 9, dans laquelle la résine est une résine siliconée.

**12.** Composition de résine selon la revendication 9, dans laquelle le caoutchouc est un caoutchouc siliconé.

**13.** Matériau d'étanchéité pour semi-conducteurs, employant la composition de résine telle que définie dans la revendication 9 ou 10.

**14.** Dissipateur thermique employant la composition de résine telle que définie dans l'une quelconque des revendications 9 à 12.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005066252 A2
- US 4952389 A
- JP 2001019425 A
- JP 2005281063 A